(19)

**Europäisches Patentamt**

**European Patent Office**

**Office européen des brevets**

(11) **EP 3 542 920 A1**

(12) **EUROPEAN PATENT APPLICATION**
published in accordance with Art. 153(4) EPC

(43) Date of publication:
**25.09.2019 Bulletin 2019/39**

(21) Application number: **17871387.1**

(22) Date of filing: **09.11.2017**

(51) Int Cl.:
*B21J 5/12* *(2006.01)*          *B21K 1/05* *(2006.01)*
*B21K 1/30* *(2006.01)*          *B60B 35/14* *(2006.01)*
*F16C 19/18* *(2006.01)*          *F16C 33/64* *(2006.01)*
*F16C 35/063* *(2006.01)*

(86) International application number:
**PCT/JP2017/040399**

(87) International publication number:
**WO 2018/092673 (24.05.2018 Gazette 2018/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **17.11.2016 JP 2016224073**

(71) Applicant: **NTN Corporation**
**Osaka-shi, Osaka 550-0003 (JP)**

(72) Inventors:
• **HIRAMATSU, Kazuki**
**Iwata-shi**
**Shizuoka 438-8510 (JP)**
• **MATSUNAGA, Hiroshi**
**Iwata-shi**
**Shizuoka 438-8510 (JP)**
• **FUJITA, Takuya**
**Iwata-shi**
**Shizuoka 438-8510 (JP)**

(74) Representative: **Grünecker Patent- und
Rechtsanwälte
PartG mbB
Leopoldstraße 4
80802 München (DE)**

(54) **METHOD FOR SPLINING WHEEL BEARING**

(57)     A spline-processing method for a wheel bearing comprising: an outer member (5) having double-row outer raceway surfaces (13, 14) formed on an inner peripheral surface thereof; an inner member (1, 2) having double-row inner raceway surfaces (7, 8) formed on an outer peripheral surface (13, 14) thereof so as to be opposed to the double-row outer raceway surfaces; and double-row rolling elements (3, 4) interposed between the raceway surfaces of the double-row outer raceway surfaces (13, 14) of the outer member (5) and the double-row inner raceway surfaces (7, 8) of the inner member (1, 2); and a cage (15, 16) configured to retain the double-row rolling elements (3, 4), the inner member (1, 2) having an interference-defined spline (39) formed on an inner periphery thereof, the interference-defined spline (39) having a guide spline (44) formed at an inboard-side end portion thereof, wherein an intermediate component (1') of the inner member (1, 2) comprises: a spline-formation inner peripheral surface (50) comprising the interference-defined spline (39) and the guide spline (44) formed thereon; and a relief portion (52), which is formed on an outboard side with respect to the spline-formation inner peripheral surface(50), and has a diameter larger than that of the spline-formation inner peripheral surface (50), wherein a punch (80) to be used for the spline processing comprises an integrated spline punch (80) comprising: an interference-defined spline forming surface configured to form the interference-defined spline; and a guide spline forming surface (83) configured to form the guide spline (44), and wherein the spline-formation inner peripheral surface (50) is formed by pressing with the integrated spline punch (80) to form the interference-defined spline (39) and the guide spline (44).

FIG. 9a

**Description**

TECHNICAL FIELD

The present invention relates to a spline-processing method for a wheel bearing.

BACKGROUND ART

As a bearing device for a wheel, for example, which rotatably supports a driving wheel (front wheel of a front-engine front-drive (FF) vehicle, rear wheel of a front-engine rear-drive (FR) vehicle, and all wheels of a four-wheel drive (4WD) vehicle) with respect to a suspension device for an automobile there is proposed a bearing device for a wheel, which is configured so that a hub wheel is separable from an outer joint member of a constant velocity universal joint to attain excellent maintainability (see, for example, Patent Document 1).

The wheel bearing device described in Patent Document 1 includes a wheel bearing including: an outer member having double-row outer raceway surfaces formed on an inner periphery thereof; an inner member including a hub wheel and an inner race, the inner member having double-row inner raceway surfaces formed on an outer periphery thereof so as to be opposed to the outer raceway surfaces; and double-row rolling elements interposed between the outer raceway surfaces of the outer member and the inner raceway surfaces of the inner member, the wheel bearing having a constant velocity universal joint separably coupled thereto with a screw fastening structure in which a stem section of an outer joint member of the constant velocity universal joint is fitted to an inner diameter surface of the hub wheel of the wheel bearing, in which a plurality of convex portions (male spline) being formed on the stem section of the outer joint member and extending in an axial direction are press-fitted to the hub wheel, which includes a plurality of concave portions formed thereon so as to have an interference with respect to the convex portions, and a shape of the convex portions is transferred to the hub wheel, to thereby provide a convex and concave fitting structure in which the convex portions and the concave portion are brought into close contact with each other at an entire fitting contact portion therebetween.

In the wheel bearing device described above, the screw fastening structure is formed of a female thread portion formed at an axial end of the stem section of the outer joint member and a bolt to be locked at a bearing surface of an inner wall of the hub wheel in a state of being threadedly engaged with the female thread portion.

In the wheel bearing device described above, the female spline having the interference with respect to the male spline formed on the stem section of the outer joint member is formed in advance in the hub wheel. Therefore, a press-fitting load to be applied when the male spline and the female spline are brought into close contact with each other at an entire fitting contact portion therebetween can be reduced. Thus, there is an advantage in that, at the time of assembling a vehicle in an automobile manufacturer, the outer joint member can be press-fitted to the hub wheel with a force that is equal to or smaller than an axial force to be generated by fastening the bolt.

The female spline of the hub wheel has hitherto been formed by broaching as cutting. Moreover, there has been proposed a technology of forming a female spline on a shaft inner diameter surface by pressing with high accuracy (Patent Document 2).

PRIOR ART DOCUMENTS

PATENT DOCUMENTS

Patent Document 1: JP 2013-233842 A
Patent Document 2: JP 2009-172663 A

SUMMARY OF THE INVENTION

PROBLEMS TO BE SOLVED BY THE INVENTION

However, in the case of the wheel bearing of Patent Document 1, a bearing surface for a bolt configured to draw the outer joint member of the constant velocity universal joint to the hub wheel is formed on an inner wall of the hub wheel. Thus, a broaching tool cannot be completely drawn out, with the result that the broaching having hitherto been performed cannot be employed.

Moreover, in the wheel bearing described above, two stages of splines including a female spline and a guide spline are formed. The female spline has an inner peripheral surface configured to receive the stem section of the outer joint member to be press-fitted thereto. The guide spline is formed at one end of the female spline and serves as an insertion guide configured to guide the press-fitting of the stem section. Formation of such two stages of splines is difficult for a system of drawing out a spline mandrel as in Patent Document 2.

Further, it is required that phases of the female spline and the guide spline match. However, a module (reference circle diameter/the number of teeth) of the spline is small, and hence it was found that there is a difficulty in matching phases of both splines in two-step formation of forming the female spline and separately forming the guide spline thereafter.

In addition, it was also found that, in order to satisfy an interference (press-fitting interference) of the female spline in the entire fitting contact portion between the hub wheel and the stem section of the outer joint member, it is required that the female spline be increased in accuracy.

In view of the problems described above, the present invention has an object to provide a spline-processing method for a wheel bearing, which is capable of increasing an accuracy of a spline and simplifying a die and processing equipment.

SOLUTION TO THE PROBLEMS

As a result of extensive studies conducted to achieve the object described above, the inventors of the present invention have arrived at the present invention based on an idea of using an integrated spline punch having a female spline (spline with interference) forming surface and a guide spline forming surface, and an idea of contriving a shape of an intermediate component of a hub wheel serving as an inner member.

As a technological measure to achieve the above-mentioned object, the present invention provides a spline-processing method for a wheel bearing comprising: an outer member having double-row outer raceway surfaces formed on an inner peripheral surface thereof; an inner member having double-row inner raceway surfaces formed on an outer peripheral surface thereof so as to be opposed to the double-row outer raceway surfaces; and double-row rolling elements interposed between the raceway surfaces of the double-row outer raceway surfaces of the outer member and the double-row inner raceway surfaces of the inner member; and a cage configured to retain the double-row rolling elements, the inner member having an interference-defined spline formed on an inner periphery thereof, the interference-defined spline having a guide spline formed at an inboard-side end portion thereof, wherein an intermediate component of the inner member comprises: a spline-formation inner peripheral surface comprising the interference-defined spline and the guide spline formed thereon; and a relief portion, which is formed on an outboard side with respect to the spline-formation inner peripheral surface, and has a diameter larger than that of the spline-formation inner peripheral surface, wherein a punch to be used for the spline processing comprises an integrated spline punch comprising: an interference-defined spline forming surface configured to form the interference-defined spline; and a guide spline forming surface configured to form the guide spline, and wherein the spline-formation inner peripheral surface is formed by pressing with the integrated spline punch to form the interference-defined spline and the guide spline.

With the configuration described above, a spline-processing method for a wheel bearing which is capable of increasing an accuracy of a spline and simplifying a die and a processing equipment can be achieved. Moreover, highly accurate phase matching between the interference-defined spline and the guide spline can be achieved.

The interference-defined spline forming surface and the guide spline forming surface of the integrated spline punch described above have a chamfered portion formed at a connection portion therebetween. With this, an accuracy of the interference-defined spline and the guide spline in the axial direction is further improved, thereby improving a lifetime of the die.

The intermediate component of the inner member has a heat-treatment hardened layer on an outer diameter surface thereof. With this, quality and accuracy of the spline is further improved.

EFFECTS OF THE INVENTION

According to one embodiment of the present invention, there can be provided the spline-processing method for the wheel bearing, which is capable of increasing the accuracy of the spline and simplifying the die and processing equipment.

BRIEF DESCRIPTION OF DRAWINGS

FIG. 1 is a vertical sectional view for illustrating a state in which a wheel bearing and a constant velocity universal joint are assembled to each other based on a spline-processing method for a wheel bearing according to an embodiment of the present invention.

FIG. 2 is a vertical sectional view for illustrating a state before assembling the wheel bearing and the constant velocity universal joint of FIG. 1 to each other.

FIG. 3a is an enlarged main part vertical sectional view for illustrating a state before press-fitting a stem section of an outer joint member to the hub wheel of the wheel bearing.

FIG. 3b is a transverse sectional view taken along the line A-A of FIG. 3a.

FIG. 4a is an enlarged main part vertical sectional view for illustrating a state on the way of press-fitting the stem section of the outer joint member to the hub wheel of the wheel bearing.

FIG. 4b is a transverse sectional view taken along the line B-B of FIG. 4a.

FIG. 5a is an enlarged main part vertical sectional view for illustrating a state after press-fitting the stem section of the outer joint member to the hub wheel of the wheel bearing.

FIG. 5b is a transverse sectional view taken along the line C-C of FIG. 5a.

FIG. 6 is a vertical sectional view for illustrating an intermediate component of a hub wheel in a spline-processing method for a wheel bearing according to a first embodiment of the present invention.

FIG. 7 is a side view for illustrating an integrated spline punch.

FIG. 8a is a view for illustrating a transverse cross section of each of spline teeth of forming surfaces of the integrated spline punch of FIG. 7.

FIG. 8b is a front view of the spline forming surfaces of the integrated spline punch of FIG. 7.

FIG. 8c is a partial side view of the integrated spline punch of FIG. 7.

FIG. 9a is a schematic view for illustrating a state in which the intermediate component of the hub wheel is set in a die in the spline-processing method for a wheel bearing according to the first embodiment of the present invention.

FIG. 9b is a schematic view for illustrating a state in which an upper punch is held in abutment against the intermediate component of the hub wheel in the spline-processing method for a wheel bearing according to the first embodiment of the present invention.

FIG. 9c is a schematic view for illustrating a state in which spline processing has been terminated in the spline-processing method for a wheel bearing according to the first embodiment of the present invention.

FIG. 9d is a schematic view for illustrating a state of removing the hub wheel in the spline-processing method for a wheel bearing according to the first embodiment of the present invention.

FIG. 10 is a vertical sectional view for illustrating the hub wheel after the spline processing.

FIG. 11a is a schematic view for illustrating a blank in a processing step for the hub wheel.

FIG. 11b is a schematic view for illustrating primary turning in the processing step for the hub wheel.

FIG. 11c is a schematic view for illustrating spline processing in the processing step for the hub wheel.

FIG. 11d is a schematic view for illustrating secondary turning in the processing step for the hub wheel.

FIG. 11e is a schematic view of heat treatment in the processing step for the hub wheel.

FIG. 11f is a schematic view of grinding in the processing step for the hub wheel.

FIG. 12a is a transverse sectional view for illustrating a state before processing the spline.

FIG. 12b is a transverse sectional view for illustrating a state after processing the spline.

FIG. 12c is a transverse sectional view of a guide spline portion.

FIG. 13 is a vertical sectional view for illustrating an intermediate component of a hub wheel in a spline-processing method for a wheel bearing according to a second embodiment of the present invention.

FIG. 14a is a schematic view of a blank in a processing step for a hub wheel.

FIG. 14b is a schematic view for illustrating turning in the processing step for the hub wheel.

FIG. 14c is a schematic view for illustrating heat treatment in the processing step for the hub wheel.

FIG. 14d is a schematic view for illustrating spline processing in the processing step for the hub wheel.

FIG. 14e is a schematic view for illustrating grinding in the processing step for the hub wheel.

FIG. 15 is a schematic view for illustrating knowledge obtained in the course of development with regard to a flow of material.

FIG. 16a is an illustration of knowledge obtained in the course of development with regard to a state of processing of the spline, and is a transverse sectional view of each of three parts of an interference-defined spline in an axial direction.

FIG. 16b is an illustration of knowledge obtained in the course of development with regard to a state of processing of the spline, and is a front view of the spline forming surfaces of the integrated spline punch.

FIG. 16c is an illustration of knowledge obtained in the course of development with regard to a state of processing of the spline, and is a partial side view of the integrated spline punch.

FIG. 17a is an illustration of knowledge obtained in the course of development with regard to a state of forming the spline, and is a vertical sectional view of the intermediate component of the hub wheel.

FIG. 17b is a sectional view of the interference-defined spline and the guide spline taken along the line D-D of FIG. 17a, when viewed in the direction indicated by the arrows.

FIG. 18 is an explanatory view for collectively illustrating knowledge obtained in the course of development.

Description of Embodiments

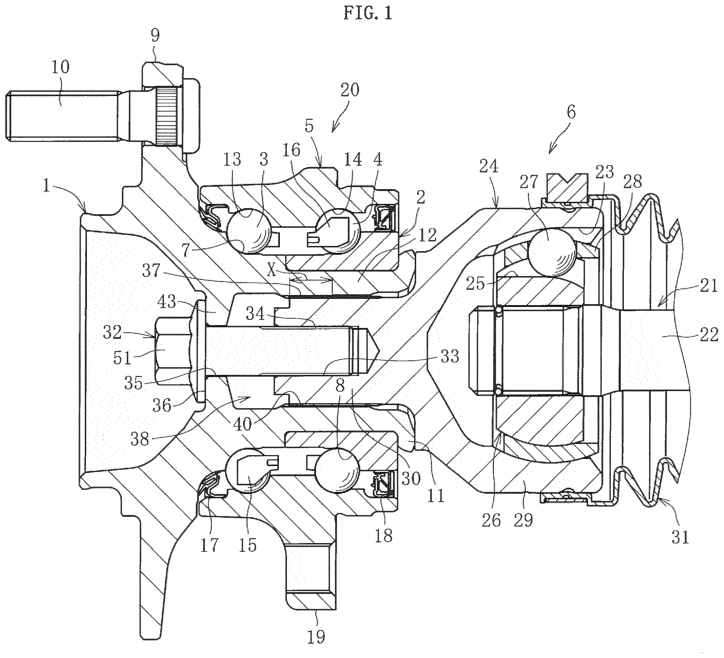

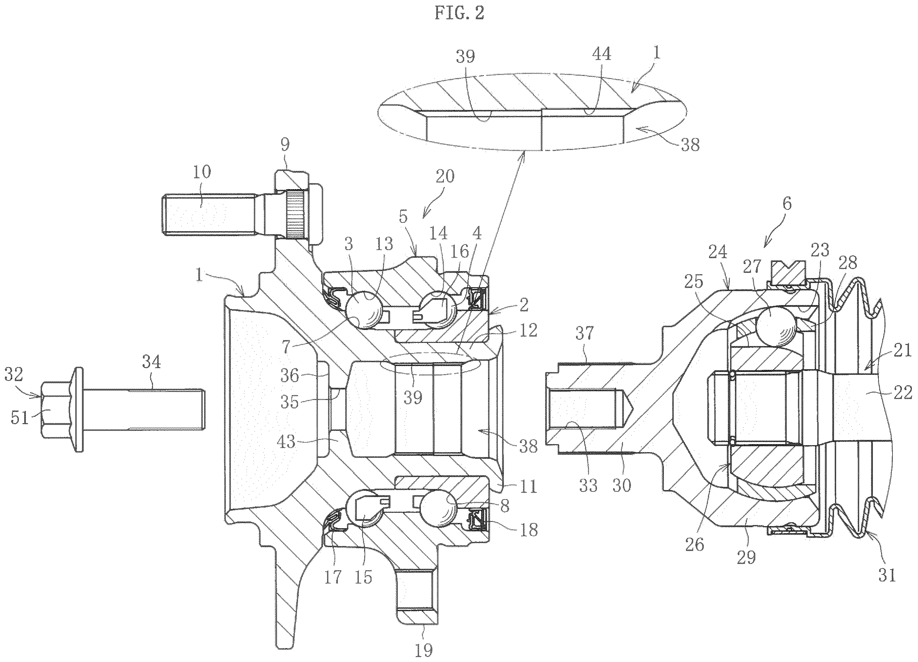

Prior to description of a spline-processing method for a wheel bearing according to a first embodiment of the present invention, description is made of a wheel bearing to be obtained by the spline-processing method and a constant velocity universal joint assembled to be assembled to the wheel bearing are described with reference to FIG. 1 to FIG. 5. FIG. 1 is a vertical sectional view for illustrating a state in which the wheel bearing and the constant velocity universal joint are assembled to each other. FIG. 2 is a vertical sectional view for illustrating a state before assembling the wheel bearing and the constant velocity universal joint of FIG. 1 to each other.

As illustrated in FIG. 1 and FIG. 2, a wheel bearing 20 mainly comprises a hub wheel 1 and an inner race 2, which are inner members, double-row rolling elements 3 and 4, an outer member 5, and cages 15 and 16. The wheel bearing 20 and the constant velocity universal joint 6 are assembled to each other to form a wheel bearing device. Note that, in the following description, an outer side of a vehicle referred to as an outboard side (left side in the figures), and a middle side of the vehicle is referred to as an inboard side (right side in the figures).

The hub wheel 1 has an inner raceway surface 7 on the outboard side formed on an outer peripheral surface thereof, and comprises a wheel mounting flange 9 for allowing a wheel (not shown) to be mounted thereto. Hub bolts 10 for fixing a wheel disc are equiangularly embedded in the wheel mounting flange 9. The inner race 2 is fitted to a small-diameter step portion 12 formed on an outer peripheral surface of the hub wheel 1 on the inboard side, and an inner raceway surface 8 on the inboard side is formed on an outer peripheral surface of the inner race 2.

The inner race 2 is press-fitted with adequate interference for the purpose of preventing creep. The inner raceway surface 7 on the outboard side that is formed on the outer peripheral surface of the hub wheel 1 and the inner raceway surface 8 on the inboard side that is formed on the outer peripheral surface of the inner race 2 constitute double-row raceway surfaces. The inner race 2 is press-fitted to the small-diameter step portion 12 of the hub wheel 1, and the end portion of the small-diameter step portion 12 is crimped outward. As a result, the inner race 2 is retained by a crimped portion 11 and integrated with the hub wheel 1, to thereby apply preload to the bearing 20 for a wheel.

The outer member 5 has, on its inner peripheral surface, double-row outer raceway surfaces 13 and 14 opposed to inner raceway surfaces 7 and 8 of the hub wheel 1 and the inner race 2. A vehicle-body mounting flange 19 of the outer member 5 is fixed to a knuckle extending from a suspension device (not shown) of a vehicle body, to thereby mount the wheel bearing 20 to the vehicle body.

The bearing 20 for a wheel has a double-row angular ball bearing structure. Specifically, the rolling elements 3 and 4 are interposed between the inner raceway surfaces 7 and 8 formed on the outer peripheral surfaces of the hub wheel 1 and the inner race 2 and the outer raceway surfaces 13 and 14 formed on the inner peripheral surface of the outer race 5, and the rolling elements 3 and 4 in respective rows are equiangularly supported by cages 15 and 16.

At opening portions on both ends of the bearing 20 for a wheel, a pair of seals 17 and 18 for sealing annular spaces between the outer race 5 and the hub wheel 1 and between the outer race 5 and the inner race 2 so as to be held in sliding-contact with the outer peripheral surfaces of the hub wheel 1 and the inner race 2 are fitted to the inner diameter at both end portions of the outer race 5. Further, the seals 17 and 18 prevent leakage of grease filled inside and entrance of water and foreign matter from the outside.

The constant velocity universal joint 6 comprises an outer joint member 24 provided at one end of an intermediate shaft 22 that constitutes a drive shaft 21, the outer joint member 24 having track grooves 23 formed in an inner peripheral surface thereof, an inner joint member 26 having track grooves 25 formed in an outer peripheral surface thereof so as to be opposed to the track grooves 23 of the outer joint member 24, torque transmission balls 27 (sometimes simply referred to as ball) built into spaces between the track grooves 23 of the outer joint member 24 and the track grooves 25 of the inner joint member 26, and a cage 28 interposed between the inner peripheral surface of the outer joint member 24 and the outer peripheral surface of the inner joint member 26 to retain the balls 27.

The outer joint member 24 comprises a mouth section 29 that accommodates internal components such as the inner joint member 26, the balls 27, and the cage 28, and a stem section 30 that integrally extends from the mouth section 29 in an axial direction. An axial end of the intermediate shaft 22 is press-fitted to the inner joint member 26, and is coupled by spline fitting to allow torque transmission therebetween.

A bellows-like boot 31 made of a resin is mounted between the outer joint member 24 of the constant velocity universal joint 6 and the intermediate shaft 22 to prevent leakage of a lubricant such as grease filled inside the joint, and to prevent entrance of foreign matter from outside the joint, thereby attaining a structure of closing an opening portion of the outer joint member 24 with the boot 31.

As illustrated in FIG. 2, a male spline 37 is formed on an outboard-side outer peripheral surface of the stem section 30 of the outer joint member 24, and a female spline 39 is formed on an outboard-side inner peripheral surface of a shaft hole 38 of the hub wheel 1. The male spline 37 of the stem section 30 of the outer joint member 24 is press-fitted to the female spline 39. The female spline 39 is an interference-defined spline, and has an interference "n" with respect to a circumferential side-wall portion 47 of the male spline 37. The interference-defined spline 39 corresponds to an interference-defined spline given in Description and Claims. In the following description, it is referred to as "interference-defined spline 39". A guide spline 44 is formed at an inboard-side end portion of the interference-defined spline 39. The guide spline 44 is configured to guide the male spline 37 at the time of starting press-fitting of the stem section 30. The guide spline 44 has such a spline shape that is formed so as to have the same phase as the interference-defined spline 39 and be larger than the male spline 37 of the stem section 30.

An inner wall 43 is provided on an outboard side of the shaft hole 38 of the hub wheel 1, and has a bearing surface 36 and an insertion hole 35 for a bolt 32. Meanwhile, a female thread portion 33 is formed at an axial end of the stem section 30 of the outer joint member 24. Under a state in which the stem section 30 of the outer joint member 24 is inserted and fitted to the shaft hole 38 of the hub wheel 1, a male thread portion 34 of the bolt 32 is inserted into the insertion hole 35 of the inner wall 43 of the male thread portion 34. The male thread portion 34 is threadedly engaged with the female thread portion 33 of the stem section 30 of the outer joint member 24. The bolt 32 is fastened under a state in which a head portion 51 of the bolt 32 is locked to the bearing surface 36, thereby press-fitting the outer joint member 24 to the hub wheel 1 and finally fixing the wheel bearing 20 and the constant velocity universal joint 6 to each other. Medium carbon steel, as represented by S53C, for a mechanical structure is suitable for a material of the outer joint member 24 and the hub wheel 1.

When the stem section 30 of the outer joint member 24 is inserted and fitted to the shaft hole 38 of the hub wheel 1 of the stem section 30, the male spline 37 of the stem section 30 is fitted to the guide spline 44 of the hub wheel 1. Thus, the male spline 37 of the stem section 30 can be guided so as to be reliably press-fitted to the interference-defined spline 39 of the hub wheel 1. Thus, stable press-fitting can be performed, thereby being capable of preventing center deviation or center inclination at the time of press-fitting.

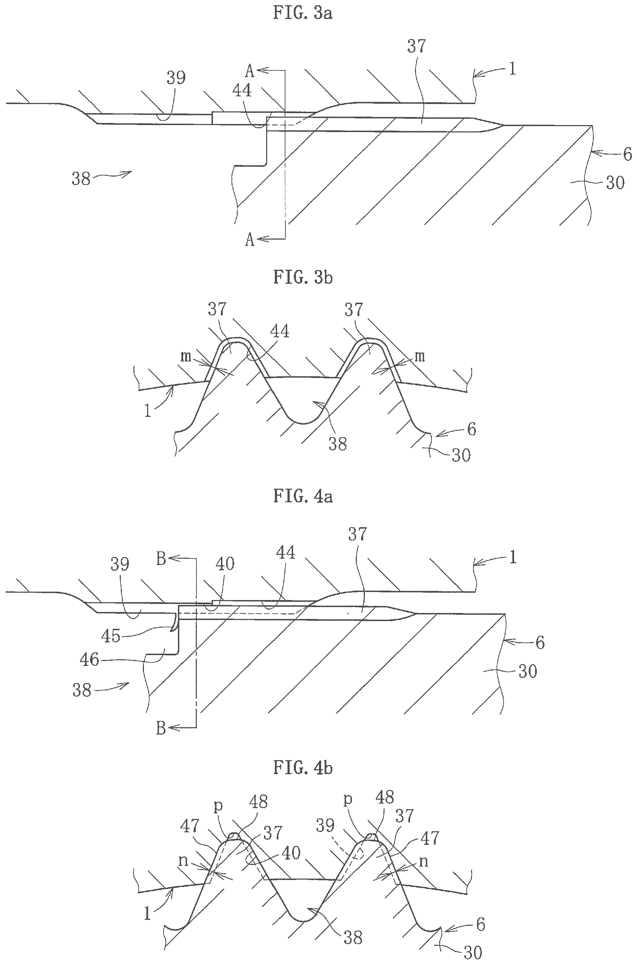

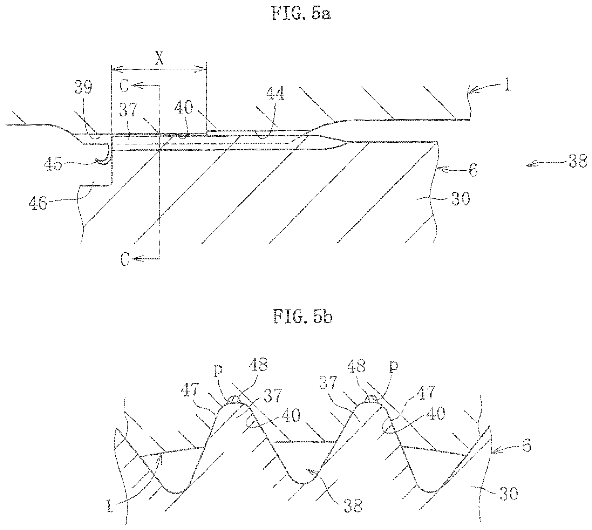

Details of the course of press-fitting the stem section of the outer joint member to the hub wheel of the wheel bearing are described with reference to FIGS. 3 to FIGS. 5. FIG. 3a is an enlarged main part vertical sectional view for illustrating a state before press-fitting the stem section of the outer joint member to the hub wheel of the wheel bearing. FIG. 3b is a transverse sectional view taken along the line A-A of FIG. 3a. FIG. 4a is an enlarged main part vertical sectional view for illustrating a state on the way of press-fitting the stem section of the outer joint member to the hub wheel of the wheel bearing. FIG. 4b is a transverse sectional view taken along the line B-B of FIG. 4a. FIG. 5a is an enlarged main part vertical sectional view for illustrating a state after press-fitting the stem section of the outer joint member to the hub wheel of the wheel bearing. FIG. 5b is a transverse sectional view taken along the line C-C of FIG. 5a.

Under a state in which a distal end portion of the male spline 37 of the stem section 30 is fitted to the guide spline 44 as illustrated in FIG. 3a, gaps "m" are defined between the male spline 37 and the guide spline 44 as illustrated in FIG. 3b. With the presence of the gap "m", the male spline 37 can be easily fitted to the guide spline 44, and can be guides so as to be reliably press-fitted to the guide spline 44.

Next, as illustrated in FIG. 4a, the male spline 37 is press-fitted to the interference-defined spline 39. As illustrated in FIG. 4b, the interference-defined spline 39 has a circumferential dimension smaller than that of the male spline 37. Therefore, the interference-defined spline 39 has the interference "n" only with respect to the circumferential side-wall portion 47 of the male spline 37. A total interference 2n of the interferences "n" on both sides of tooth surfaces of the interferences spline is from about 10 $\mu$m to 50 pm. Moreover, the interference-defined spline 39 has a radial dimension larger than that of the male spline 37. Therefore, a gap "p" is defined between a part of the male spline 37 excluding the circumferential side-wall portions 47, that is, a radial distal end portion 48 of the male spline 37 and the interference-defined spline 39. The male spline 37 has a tooth shape having a trapezoidal cross sectional shape, but may have an involute tooth shape. The male spline 37 has a module falling within a range of from 0.3 to 0.75, which is set smaller than a module of a conventional spline having a module of equal to or more than 1.0.

As illustrated in FIG. 5a and FIG. 5b, when the stem section 30 is to be press-fitted to the shaft hole 38 of the hub wheel 1, a surface of the interference-defined spline 39 is cut extremely slightly with the circumferential side-wall portions 47 of the male spline 37, and along with extremely slight plastic deformation or elastic deformation, the shape of the circumferential side-wall portions 47 of the male spline 37 is transferred to the interference-defined spline 39, thereby forming concave surfaces 40. As illustrated in FIG. 5a, a protruding part 45 formed by the transfer described above is retained in an accommodation portion 46. Therefore, removal of the protruding part 45 is not required, thereby being capable of achieving reduction in the number of working steps, improvement in operability, and cost reduction. It is preferred that the male spline 37 have a surface hardness higher than a surface hardness of the interference-defined spline 39. For example, it is suitable to set a difference between the surface hardness of the male spline 37 and the surface hardness of the interference-defined spline 39 be equal to or more than 20 in unit of HRC. Moreover, it is suitable to set the surface hardness of the male spline 37 so as to fall within a range of from HRC50 to HRC65, and set the surface hardness of the interference-defined spline 39 so as to fall within a range of from HRC10 to HRC30.

At the time of press-fitting, the circumferential side-wall portions 47 of the male spline 37 bite into the interference-defined spline 39 to slightly increase the inner diameter of the hub wheel 1, thereby allowing relative movement of the male spline 37 in the axial direction. When the relative movement of the male spline 37 in the axial direction is stopped, the shaft hole 38 of the hub wheel 1 tends to return to an original diameter. With this, the male spline 37 and the concave surfaces 40 of the interference-defined spline 39 are brought into close contact with each other in an entire fitting contact portion X, thereby being capable of rigidly connecting and integrating the outer joint member 24 and the hub wheel 1 to each other.

With the press-fitting state as described above, a large press-fitting load is not required. Therefore, at the time of assembly of a vehicle in an automobile manufacturer, after the wheel bearing 20 is mounted to a knuckle extending from a suspension device of a vehicle body, the stem section 30 of the outer joint member 24 can be press-fitted to the shaft hole 38 of the hub wheel 1 with a drawing force given by the bolt 32 for fastening and fixing, thereby being capable of assembling the constant velocity universal joint 6 to the wheel bearing 20 in a simple manner. As a result, an operation of assembly to the vehicle body is improved, thereby being capable of preventing in advance damage on components at the time of assembly.

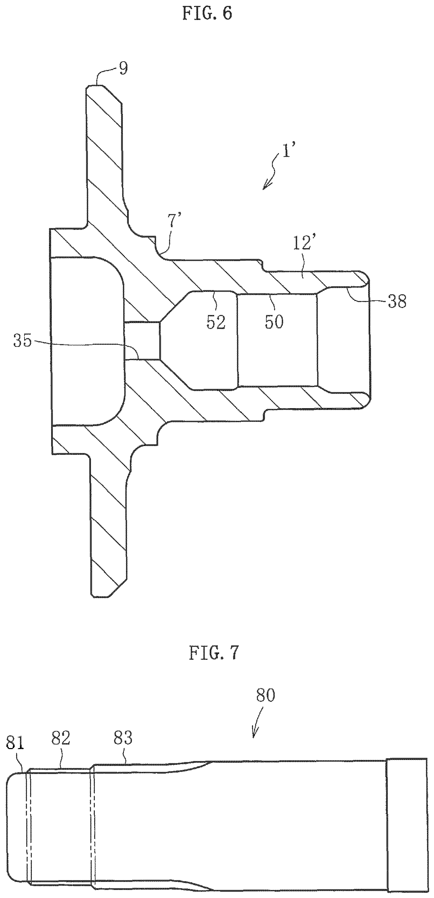

The overall configuration of the wheel bearing and the constant velocity universal joint is as described above. Next, a spline-processing method for a wheel bearing according to a first embodiment of the present invention is described with reference to FIG. 6 to FIGS. 12. Briefly, in the spline-processing method for a wheel bearing according to this embodiment, an integrated spline punch comprising an interference-defined spline forming surface and a guide spline forming surface is used, and a relief portion is formed on an outboard side of an inner peripheral surface which is configured to form the interference-defined spline of an intermediate component of the hub wheel, thereby achieving increase in accuracy of the interference-defined spline and simplification of a die and processing equipment.

First, with reference to FIG. 6, description is made of an intermediate component 1' of the hub wheel 1. FIG. 6 is a vertical sectional view for illustrating the intermediate component 1' of the hub wheel 1. The intermediate component 1' of the hub wheel 1 is obtained by subjecting a forged preform to machining such as turning or drilling to have a wheel mounting flange 9, an outboard-side inner raceway surface 7', a small-diameter step portion 12', the shaft hole 38, a spline-formation inner peripheral surface 50, a relief portion 52, the insertion hole 35, and hub bolt holes (not shown). The relief portion 52 has an inner diameter which is larger than an inner diameter of the spline-formation inner peripheral surface 50 with a suitable dimension. Details of an action of the relief portion 52 are described later.

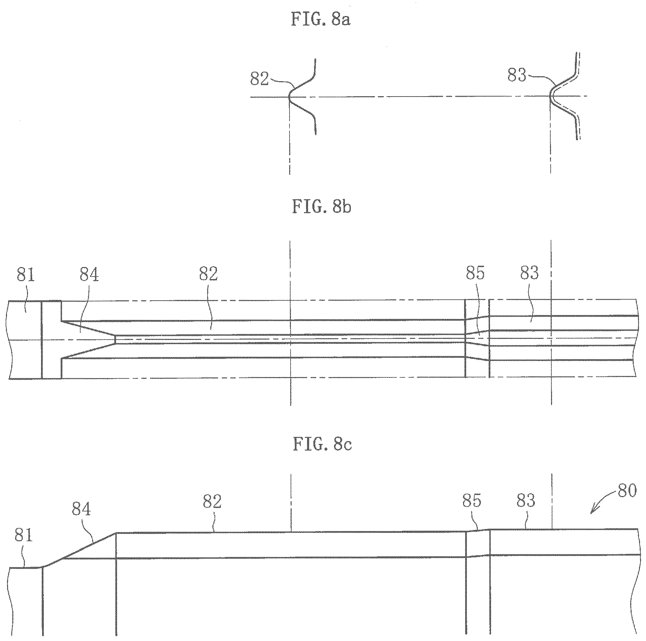

Next, with reference to FIG. 7 and FIG. 8, description is made of the integrated spline punch to be used for the spline processing. FIG. 7 is a side view for illustrating the integrated spline punch. FIG. 8a is a view for illustrating a transverse cross section of each of spline teeth of forming surfaces of the integrated spline punch. FIG. 8b is a front view of the spline forming surfaces of the integrated spline punch. FIG. 8c is a partial side view of the integrated spline punch. As illustrated in FIG. 7, an integrated spline punch 80 comprises a cylindrical guide surface 81, which is formed at a distal end portion, an interference-defined spline forming surface 82, and a guide spline forming surface 83.

As illustrated in FIG. 8b and FIG. 8c, the integrated spline punch 80 comprises a chamfered portion 84 and a chamfered portion 85. The chamfered portion 84 is formed at a connection portion between the cylindrical guide surface 81 and the interference-defined spline forming surface 82. The chamfered portion 85 is formed at a connection portion between the interference-defined spline forming surface 82 and the guide spline forming surface 83. The interference-defined spline forming surface 82 and the guide spline forming surface 83 match each other in phase. An inclination angle of each of the chamfered portions 84 and 85 is suitably set in consideration of, for example, a flow of material or suppression of an axial dimension. It is preferred that the chamfered portion 84 have an inclination angle of from about 20° to about 30°, and the chamfered portion 85 have an inclination angle of from about 2° to about 8°.

As illustrated in FIG. 8a, the guide spline forming surface 83 has a spline tooth shape which is formed so as to be larger than a spline tooth shape of the interference-defined spline forming surface 82. The broken line on an inner side of the spline tooth shape of the guide spline forming surface 83 indicates the spline tooth shape of the interference-defined spline forming surface 82. With this, the gap "m" described above with reference to FIG. 3b is secured. In FIG. 8a, hatching on the cross section is omitted for ease of viewing the drawing.

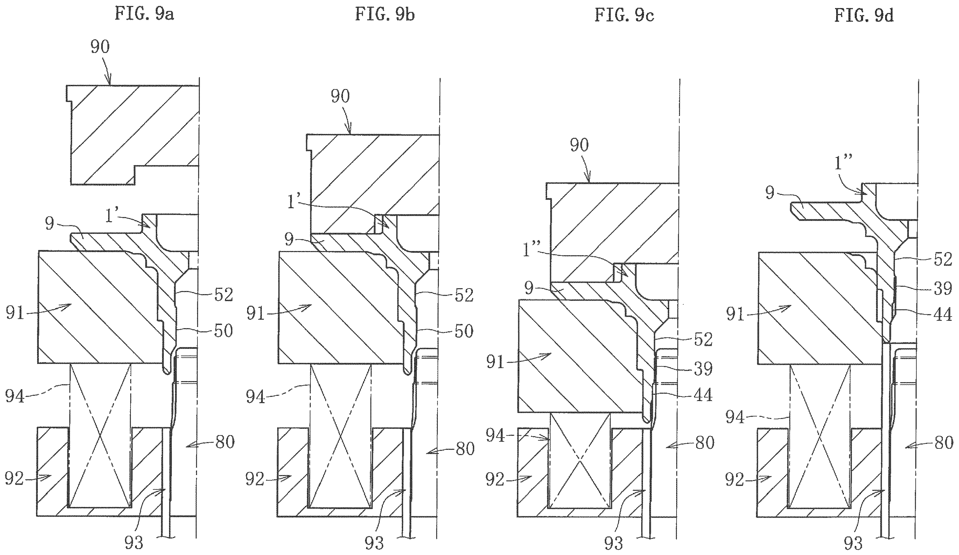

Next, with reference to FIGS. 9, description is made of the processing step for the splines. FIG. 9a is a schematic view for illustrating a state in which the intermediate component of the hub wheel is set in a die. FIG. 9b is a schematic view for illustrating a state in which an upper punch is brought into abutment against the intermediate component of the hub wheel. FIG. 9c is a schematic view for illustrating a state in which the spline processing has been terminated. FIG. 9d is a schematic view for illustrating a state of removing the hub wheel. As illustrated in FIG. 9a to FIG. 9d, the main die to be used for the spline-processing method comprises an upper punch 90, a die 91, a base 92, the integrated spline punch 80, and a work-piece knockout 93. A compression spring 94 is incorporated between the die 91 and the base 92. As described above, the spline-processing method according to this embodiment is capable of achieving a simple die structure and a simple equipment structure.

As illustrated in FIG. 9a, the upper punch 90 retreats upward, and the die 91 is positioned at an upper end by a pressing force of the compression spring 94. The integrated spline punch 80 is fixed to the base 92. The work-piece knockout 93 retreats downward. In this state, the intermediate component 1' of the hub wheel 1 is set in the die 91. An outer peripheral surface of the intermediate component 1' is restricted by the die 91.

As illustrated in FIG. 9b, the upper punch 90 advances downward to be brought into abutment against the wheel mounting flange 9 of the intermediate component 1'. As the upper punch 90 further advances, as illustrated in FIG. 9c, the intermediate component 1' restricted by the die 91 is lowered. With this, the interference-defined spline 39 and the guide spline 44 are formed on the spline-formation inner peripheral surface 50 of the intermediate component 1'. As a result, a spline-formed product 1" is obtained. As described above, the interference-defined spline 39 and the guide spline 44 can be formed by one stroke of pressing.

After formation of the interference-defined spline 39 and the guide spline 44 is terminated, as illustrated in FIG. 9d, the upper punch 90 retreats to an upper end, and the work-piece knockout 93 advances upward. Then, the spline-formed product 1" is removed from the die 91.

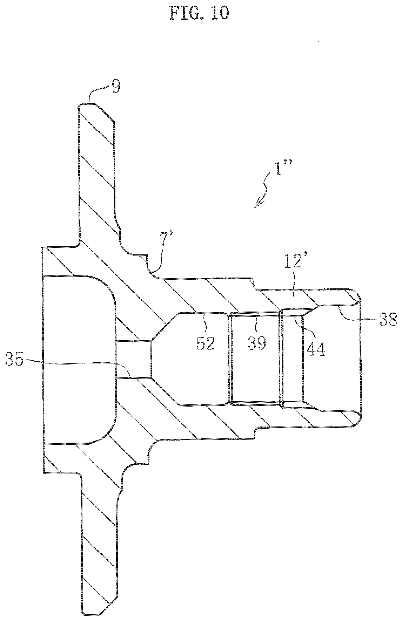

FIG. 10 is an illustration of the spline-formed product 1" of the hub wheel 1. In this embodiment, the integrated spline punch 80 is used, and the intermediate component 1' formed based on knowledge obtained in the course of development, which is described later, has the relief portion 52 having an inner diameter which is larger than an inner diameter of the spline-formation inner peripheral surface 50. With this, the spline-formed product 1" has, on its inner periphery, the interference-defined spline 39 and the guide spline 44 having high accuracy. In addition, with the use of the integrated spline punch 80, highly accurate phase matching between the interference-defined spline 39 and the guide spline 44 can be achieved.

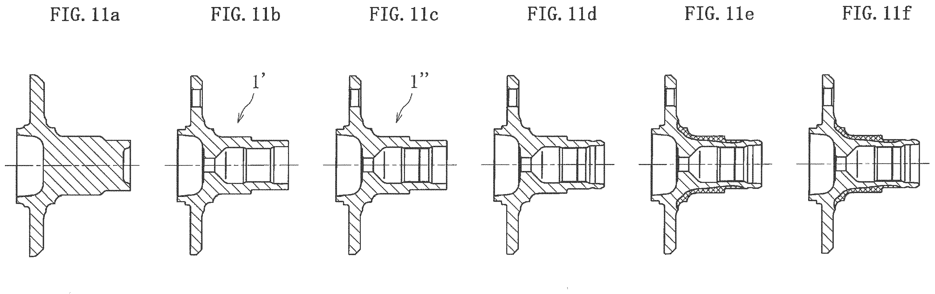

FIGS. 11 are schematic illustrations of the processing step for the hub wheel to which the processing method for a wheel bearing according to this embodiment is applied. First, a preform is prepared in a forging step illustrated in FIG. 11a. After that, in a primary turning step illustrated in FIG. 11b, the preform is subjected to turning to have, for example, an outer peripheral surface, an inner peripheral surface, and an insertion hole, thereby preparing the intermediate component 1'. Next, in the spline processing step illustrated in FIG. 11c, the intermediate component 1' is subjected to the spline processing described above, thereby obtaining the spline-formed product 1". This spline processing step is based on the spline-processing method according to this embodiment. In a secondary turning step illustrated in FIG. 11d, the spline-formed product 1" is subjected to turning to have, for example, a cylindrical outer peripheral surface and a small-diameter step portion. After that, in a heat treatment step illustrated in FIG. 11e, a heat-treatment hardened layer is formed partially at a root of the wheel mounting flange, the inner raceway surface, the cylindrical outer peripheral surface, and the small-diameter step portion. Finally, in a grinding step illustrated in FIG. 11f, the root of the wheel mounting flange, the inner raceway surface, and the small-diameter step portion are subjected to grinding, thereby completing the hub wheel.

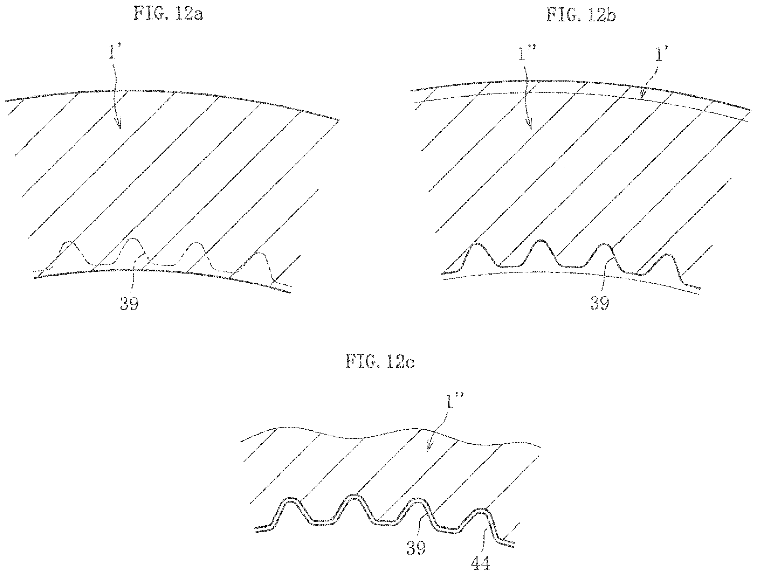

In the spline processing described above, in relation to a cross-section reduction ratio involved in formation of the splines, a diameter of the outer peripheral surface of the spline-formed product is slightly increased as a whole. Such state is illustrated in FIGS. 12. FIG. 12a is a transverse sectional view for illustrating a state before processing. FIG. 12b is a transverse sectional view for illustrating a state after processing. FIG. 12c is a transverse sectional view of a guide spline portion. When the interference-defined spline 39 indicated by the broken line is formed on the intermediate component 1' illustrated in FIG. 12a, as illustrated in FIG. 12b, based on the cross-section reduction ratio, an outer diameter of the spline-formed product 1" is slightly increased as compared to an outer diameter of the intermediate component 1' indicated by the two-dot chain line. Such slight increase in outer diameter of the spline-formed product 1" as a whole can be dealt with the secondary turning of FIG. 11d described above.

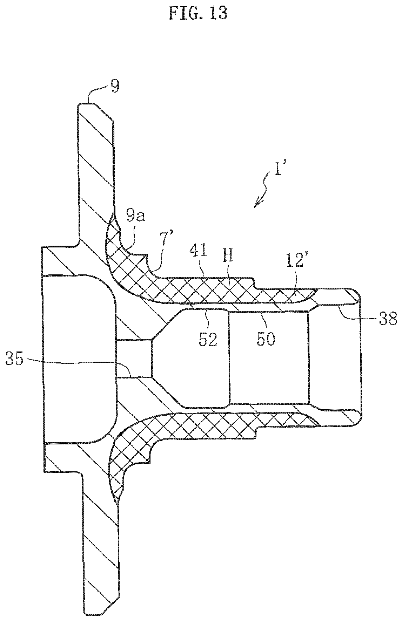

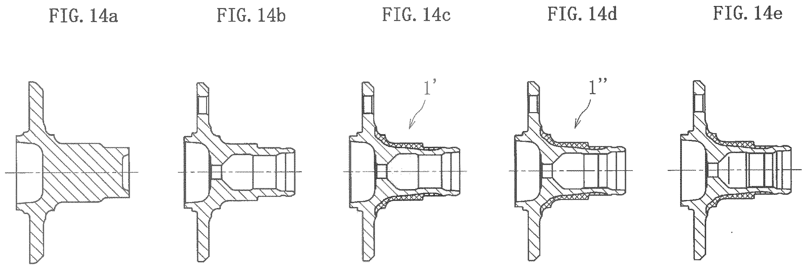

Next, with reference to FIG. 13 and FIGS. 14, description is made of a spline-processing method for a wheel bearing according to a second embodiment of the present invention. In this embodiment, as compared to the first embodiment, a heat-treatment hardened layer is further formed on a radially outer side of the spline-formation inner peripheral surface of the intermediate component 1' of the hub wheel 1. In addition to the use of the integrated spline punch and formation of the relief portion having an inner diameter larger than that of the spline-formation inner peripheral surface, the heat-treatment hardened layer is formed on the radially outer side of the spline-formation inner peripheral surface of the intermediate component of the hub wheel obtained based on the knowledge obtained in the course of development described later. In combination of both the features, quality and accuracy of the spline is further improved.

With reference to FIG. 13, description is made of the intermediate component 1' of the hub wheel 1 to be used for the spline-processing method for a wheel bearing according to this embodiment. A heat-treatment hardened layer H is formed in advance on the radially outer side of the spline-formation inner peripheral surface 50 of the intermediate component 1'. The heat-treatment hardened layer H extends from a root 9a of the wheel mounting flange to the inner raceway surface 7', the cylindrical outer peripheral surface 41, and a part of the small-diameter step portion 12'. The heat-treatment hardened layer H is illustrated in terms of a range of an overall hardened layer depth. The overall hardened layer depth is a range of hardening by the heat treatment to a hardness higher than a blank hardness given before heat treatment, and the blank hardened layer given before the heat treatment falls within a range of from about HRC10 to about HRC30. Other configurations of the intermediate component 1' are the same as those of the intermediate component 1' in the first embodiment. Therefore, parts having the same functions are denoted by the same reference symbols, and description thereof is omitted. Moreover, the spline processing step in this embodiment is the same as that in the first embodiment, and hence contents of the spline processing step in the first embodiment is applied, and description thereof is omitted.

FIGS. 14 are schematic illustrations of the processing step for the hub wheel to which the processing method for a wheel bearing according to this embodiment is applied. First, a preform is prepared in a forging step illustrated in FIG. 14a. Next, in a primary turning step illustrated in FIG. 14b, the preform is subjected to turning to have, for example, an outer peripheral surface, an inner peripheral surface, and an insertion hole. After that, in a heat treatment step illustrated in FIG. 14c, the intermediate component 1' comprising the heat-treatment hardened layer formed on each of the root of the wheel mounting flange, the inner raceway surface, the cylindrical outer peripheral surface, and the small-diameter step portion is prepared. In the spline processing step illustrated in FIG. 14d, the intermediate component 1' having formed thereon the heat-treatment hardened layer is subjected to the spline processing, thereby obtaining the spline-formed product 1". This spline processing step is based on the spline-processing method according to this embodiment. Finally, in a grinding step illustrated in FIG. 14e, the root of the wheel mounting flange of the spline-formed product 1", the inner raceway surface, and the small-diameter step portion are subjected to grinding, thereby completing the hub wheel. The heat treatment step is incorporated before the spline processing step, thereby shortening the processing step as compared to the first embodiment.

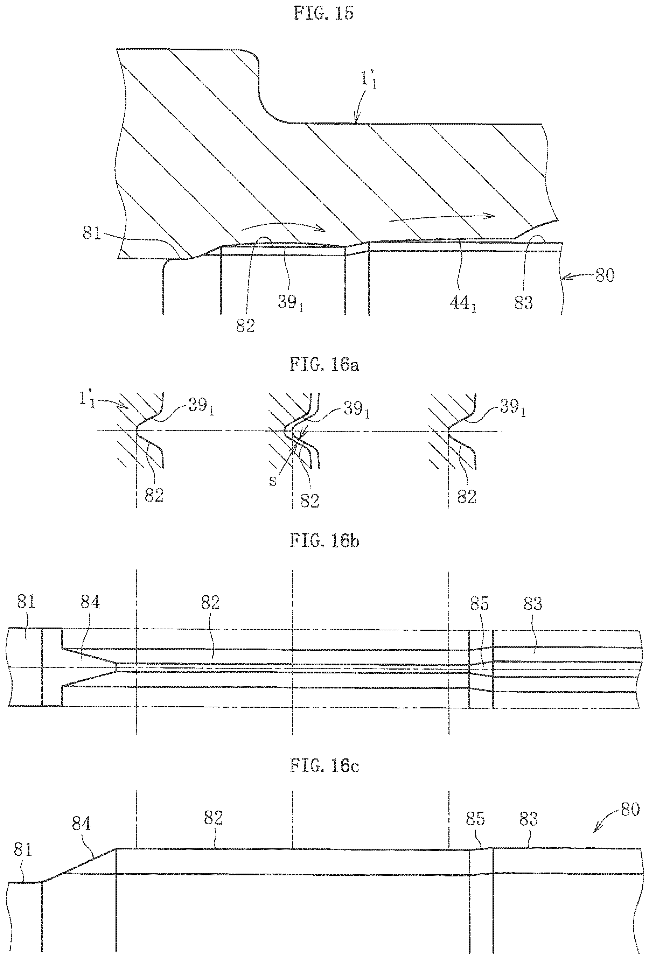

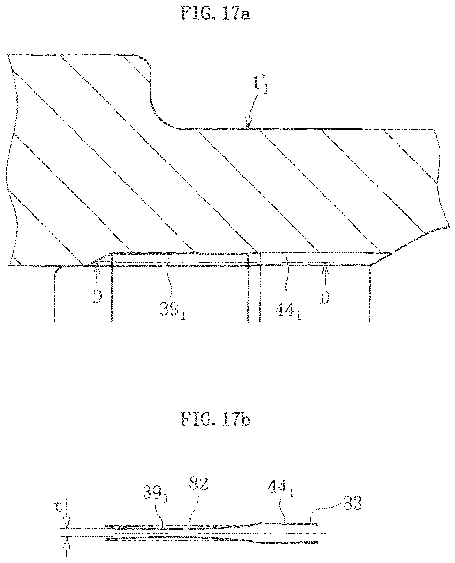

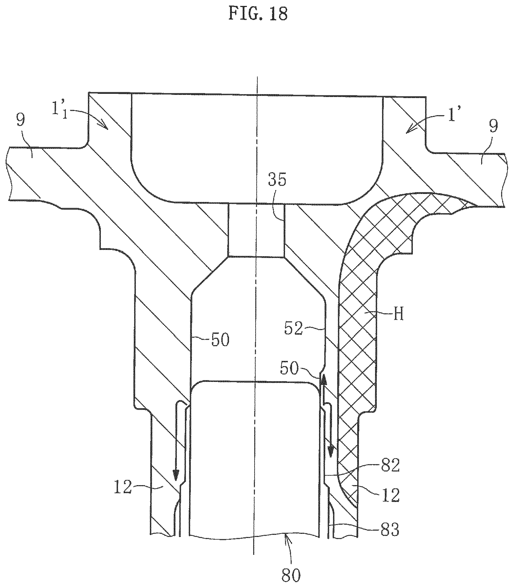

Finally, the knowledge obtained in the course of development to the arrival at the first and second embodiments of the present invention is collectively described with reference to FIG. 15 to FIG. 18. FIG. 15 is a schematic view for illustrating the knowledge obtained in the course of development with regard to a flow of material. FIG. 16a is an illustration of the knowledge obtained in the course of development with regard to a state of processing of the spline, and is a transverse sectional view of each of three parts of the interference-defined spline in the axial direction. FIG. 16b is a front view of the spline forming surfaces of the integrated spline punch. FIG. 16c is a partial side view of the integrated spline punch. FIG. 17a is a vertical sectional view of the intermediate component of the hub wheel. FIG. 17b is a sectional view of the interference-defined spline and the guide spline taken along the line D-D of FIG. 17a, when viewed in the direction indicated by the arrows. FIG. 18 is a collective illustration of the knowledge obtained in the course of development. The left half from the center line is a vertical sectional view of the intermediate component having no relief portion, and the right half from the center line is a vertical sectional view of the intermediate component having the relief portion and the heat-treatment hardened layer.

First, an intermediate component $1'_1$ comprising a straight shape without the relief portion as illustrated in the left half of FIG. 18 is prepared, and a test was conducted with regard to pressing of the splines with use of the integrated spline punch 80 comprising the interference-defined spline forming surface 82 and the guide spline forming surface 83.

However, when the integrated spline punch 80 is used, with the flow of material indicated by the arrows in FIG. 15, at the time of formation of a guide spline $44_1$ portion, a material is pressed toward a side of an interference-defined spline $39_1$ having been formed. Therefore, the shape of the interference-defined spline $39_1$ is lost. As a result, as illustrated in FIG. 15, the interference-defined spline $39_1$ is formed into a barrel shape, which may cause variation in the interferences "n" illustrated in FIG. 4b. Accordingly, the following fact was found. That is, at the time of fitting between of the stem section 30 to the hub wheel 1, when the interferences are given in the entire fitting contact portion X, the press-fitting load is increased by the drawing force of the bolt 32 (see FIG. 2), with the result that the product function is not satisfied.

With reference to FIG. 16 and FIG. 17, description is made of the state of the barrel shape of the interference-defined spline $39_1$. As illustrated in FIGS. 16, both ends of the interference-defined spline $39_1$ in the axial direction are in contact with the interference-defined spline forming surface 82 of the integrated spline punch 80, but a center portion of the interference-defined spline $39_1$ in the axial direction is formed in a state of being separated apart from the interference-defined spline forming surface 82 by a tooth gap "s".

Further, in FIG. 17a and FIG. 17b, illustration is given of a state of the spline teeth of the interference-defined spline $39_1$ and the guide spline $44_1$ in a tooth trace direction. As illustrated in FIG. 17b, a spline tooth width "t" at the center portion of the interference-defined spline $39_1$ in the axial direction is formed so as to be smaller than a spline tooth width of the interference-defined spline forming surface 82 indicated by the two-dot chain line. As a result, the interferences "n" vary in the axial direction of the interference-defined spline $39_1$. In FIG. 17b, hatching of the cross section of the spline tooth is omitted.

As a result of extensive studies based on the knowledge described above, the inventors of the present invention have arrived at the idea of forming, as illustrated in the right half of FIG. 18, the relief portion 52 having an inner diameter larger than that of the spline-formation inner peripheral surface 50 on the outboard side of the spline-formation inner peripheral surface 50 of the intermediate component 1' of the hub wheel 1. In the intermediate component $1'_1$ having no relief portion as illustrated in the left half of FIG. 18, when the pressing is performed with the integrated spline punch 80, as indicated by the arrows in the left half of FIG. 18, a flow of material given at the time of forming the splines is present only on the rear side of the integrated spline punch 80, with the result that deformation of the interference-defined spline 39 becomes larger. In contrast, it was found that, when the intermediate component 1' has the relief portion 52, and the pressing with the integrated spline punch 80 is performed, as indicated by the arrows in the right half of FIG. 18, the flow of the material given during formation of the splines is present not only on the rear side of the integrated spline punch 80, and a flow in a direction toward the distal end portion of the punch is also generated, thereby being capable of suppressing the deformation of the interference-defined spline 39 given during formation of the guide spline 44. As a result, it was verified that the accuracy in formation of the interference-defined spline 39 is improved, thereby being capable of suppressing variation in tooth gap "s" of the interference-defined spline 39 and variation in the interferences "n".

Further, the inventors of the present invention have arrived at the idea of forming the heat-treatment hardened layer H on the radially outer side of the spline-formation inner peripheral surface 50 of the intermediate component 1' of the hub wheel 1 to thereby enhance stiffness of the intermediate component 1'. It has been verified that, when the integrated spline punch 80 is pressed into the intermediate component 1' in the stage of formation of the heat-treatment hardened layer H on the radially outer side of the intermediate component 1' of the spline-formation inner peripheral surface 50, the deformation of the interference-defined spline 39 in the axial direction in the barrel shape is alleviated, thereby being capable of performing processing with high accuracy.

Meanwhile, when the integrated spline punch 80 is pressed into the intermediate component 1' having the heat-treatment hardened layer formed thereon to form the splines, the material flows in the axial direction toward the inboard side, with the result that cracks become more liable to occur on the radially outer side of the intermediate component 1'. When the inner diameter of the blank is increased to reduce the cross-section reduction ratio in order to suppress the flow of the material as a countermeasure for the cracks, the cracks become less liable to occur on the radially outer side. However, burrs and chips are formed at the spline portions as in the case of cutting, with the result that the formation quality of the splines is liable to be degraded. Therefore, it was found that the range of processing conditions achieving high accuracy (cross-section reduction ratio) without causing cracks on the radially outer side is very narrow.

The cross-section reduction ratio described above is expressed by the following expression.

$$\text{Cross-section reduction ratio (\%)} = [(\text{sectional area before formation} - \text{sectional area after formation})/\text{sectional area before formation}] \times 100$$

However, it was found that formation of the relief portion 52 on the outboard side of the spline-formation inner peripheral surface 50 of the intermediate component 1' of the hub wheel 1 described above is effective for prevention of the cracks on the intermediate component 1' having the heat-treatment hardened layer H. It was found that, when the relief portion 52 having an inner diameter larger than that of the spline-formation inner peripheral surface 50 is formed on the outboard side of the spline-formation inner peripheral surface 50 of the intermediate component 1', and pressing is performed with the integrated spline punch 80, as described above, the flow of the material given during formation of the splines is present not only on the rear side of the integrated spline punch 80, and the flow in the direction toward the distal end portion of the punch is also generated, thereby being capable of significantly suppressing tensile stress in the axial direction toward the radially outer side of the intermediate component 1' having the heat-treatment hardened layer and preventing the cracks on the radially outer side.

As described above, it was verified that, in a case in which the pressing is performed with the integrated spline punch 80, when the relief portion 52 having an inner diameter larger than that of the spline-formation inner peripheral surface 50 is formed in advance on the outboard side of the spline-formation inner peripheral surface 50 of the intermediate component 1', the formation accuracy of the interference-defined spline 39 is improved. Accordingly, the inventors of the present invention have arrived at the first embodiment. Further, it was verified that formation of the relief portion having an inner diameter larger than that of the spline-formation inner peripheral surface 50 and formation of the heat-treatment hardened layer on the radially outer side of the spline-formation inner peripheral surface of the intermediate component 1' of the hub wheel 1, and in combination of those features, quality and accuracy of the spline is further improved. Accordingly, the inventors of the present invention have arrived at the second embodiment.

In the spline-processing method for a wheel bearing according to the embodiments described above, illustration is given of the example in which the relief portion 52 of the intermediate component 1' of the hub wheel 1 is formed in the turning step. However, the present invention is not limited thereto. The relief portion 52 may be formed in the forging step for the preform of the hub wheel 1. Moreover, in the case of the second embodiment, the relief portion 52 may be formed after the heat treatment step.

Further, in the spline-processing method for a wheel bearing according to the embodiment described above, there is exemplified a case where the present invention is applied to a wheel bearing of the type in which one of the double-row inner raceway surfaces 7 and 8 formed on the inner member comprising the hub wheel 1 and the inner race, that is, the inner raceway surface 7 on the outboard side is formed on the outer periphery of the hub wheel 1 (referred to as "third generation"). However, the present invention is not limited thereto, but is also applicable to a wheel bearing of the type in which a pair of inner races is press-fitted to the outer periphery of the hub wheel and the raceway surface 7 on the outboard side is formed on the outer periphery of one of the inner races, while the raceway surface 8 on the inboard side is formed on the outer periphery of the other of the inner races (referred to as "first and second generations").

The present invention is not limited to the embodiments described above, and as a matter of course, may be carried out in various other embodiments without departing from the spirit of the present invention. The scope of the

# EP 3 542 920 A1

present invention is defined in the scope of claims, and encompasses meaning of equivalents of elements described in the scope of claims and all modifications in the scope of claims.

DESCRIPTION OF REFERENCE SIGNS

| 1 | hub wheel |
| 1' | intermediate component |
| 2 | inner race |
| 3 | rolling element |
| 4 | rolling element |
| 5 | outer member |
| 6 | constant velocity universal joint |
| 7 | inner raceway surface |
| 8 | inner raceway surface |
| 12 | small-diameter step portion |
| 13 | outer raceway surface |
| 14 | outer raceway surface |
| 15 | cage |
| 16 | cage |
| 20 | wheel bearing |
| 24 | outer joint member |
| 30 | stem section |
| 32 | bolt |
| 37 | male spline |
| 38 | shaft hole |
| 39 | interference-defined spline |
| 44 | guide spline |
| 50 | spline-formation inner peripheral surface |
| 52 | relief portion |
| 80 | integrated spline punch |
| 82 | interference-defined spline forming surface |
| 83 | guide spline forming surface |
| 85 | chamfered portion |
| 90 | upper punch |
| 91 | die |
| 92 | base |
| H | heat-treatment hardened layer |
| m | gap |
| n | interference |

## Claims

1. A spline-processing method for a wheel bearing comprising:

an outer member having double-row outer raceway surfaces formed on an inner peripheral surface thereof;
an inner member having double-row inner raceway surfaces formed on an outer peripheral surface thereof so as to be opposed to the double-row outer raceway surfaces; and
double-row rolling elements interposed between the raceway surfaces of the double-row outer raceway surfaces of the outer member and the double-row inner raceway surfaces of the inner member; and
a cage configured to retain the double-row rolling elements,
the inner member having an interference-defined spline formed on an inner periphery thereof,
the interference-defined spline having a guide spline formed at an inboard-side end portion thereof,
wherein an intermediate component of the inner member comprises:

a spline-formation inner peripheral surface comprising the interference-defined spline and the guide spline formed thereon; and

a relief portion, which is formed on an outboard side with respect to the spline-formation inner peripheral surface, and has a diameter larger than that of the spline-formation inner peripheral surface,

wherein a punch to be used for the spline processing comprises an integrated spline punch comprising:

an interference-defined spline forming surface configured to form the interference-defined spline; and
a guide spline forming surface configured to form the guide spline, and

wherein the spline-formation inner peripheral surface is formed by pressing with the integrated spline punch to form the interference-defined spline and the guide spline.

2. The spline-processing method for a wheel bearing according to claim 1, wherein the interference-defined spline forming surface and the guide spline forming surface of the integrated spline punch each have a chamfered portion formed at a connection portion therebetween.

3. The spline-processing method for a wheel bearing according to claim 1 or 2, wherein the intermediate component of the inner member has a heat-treatment hardened layer on an outer diameter surface thereof.

FIG. 1

FIG. 2

FIG. 3a

FIG. 3b

FIG. 4a

FIG. 4b

FIG. 5a

FIG. 5b

**FIG. 6**

**FIG. 7**

FIG. 8a

FIG. 8b

FIG. 8c

FIG. 9a  FIG. 9b  FIG. 9c  FIG. 9d

FIG. 10

FIG. 11f

FIG. 11e

FIG. 11d

FIG. 11c

1''

FIG. 11b

1'

FIG. 11a

FIG. 12a

FIG. 12b

FIG. 12c

FIG. 13

FIG. 14e

FIG. 14d

1''

FIG. 14c

1'

FIG. 14b

FIG. 14a

FIG. 15

FIG. 16a

FIG. 16b

FIG. 16c

FIG. 17a

$1'_1$

D

$39_1$

$44_1$

D

FIG. 17b

$39_1$

82

$44_1$

83

t

FIG. 18

| **INTERNATIONAL SEARCH REPORT** | International application No. |
|---|---|
| | PCT/JP2017/040399 |

A. CLASSIFICATION OF SUBJECT MATTER
Int.Cl.   B21J5/12(2006.01)i,   B21K1/05(2006.01)i,   B21K1/30(2006.01)i,
B60B35/14(2006.01)i, F16C19/18(2006.01)i, F16C33/64(2006.01)i,
F16C35/063(2006.01)i

According to International Patent Classification (IPC) or to both national classification and IPC

B.   FIELDS SEARCHED

Minimum documentation searched (classification system followed by classification symbols)
Int.Cl. B21J5/12, B21K1/05, B21K1/30, B60B35/14, F16C19/18, F16C33/64, F16C35/063

Documentation searched other than minimum documentation to the extent that such documents are included in the fields searched
Published examined utility model applications of Japan      1922–1996
Published unexamined utility model applications of Japan    1971–2017
Registered utility model specifications of Japan            1996–2017
Published registered utility model applications of Japan    1994–2017

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2013-233842 A (NTN CORPORATION) 21 November 2013, paragraphs [0037]-[0062], fig. 1-9 & US 2015/0321511 A1, paragraphs [0055]-[0080], fig. 1-9 & WO 2013/161880 A1 & EP 2857224 A1 & CN 104271358 A | 1-3 |
| Y | JP 2012-196695 A (TOYOTA MOTOR CORP.) 18 October 2012, paragraphs [0015]-[0018], fig. 1-3 (Family: none) | 1-3 |
| Y | JP 11-33662 A (TOYOTA MOTOR CORP.) 09 February 1999, paragraphs [0002]-[0003], [0014]-[0015] (Family: none) | 1-3 |

☒ Further documents are listed in the continuation of Box C.    ☐ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 18 December 2017 (18.12.2017) | 26 December 2017 (26.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2017/040399 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2013-177973 A (NTN CORPORATION) 09 September 2013, paragraphs [0051]-[0052], fig. 3 (Family: none) | 3 |
| A | JP 2015-36266 A (NTN CORPORATION) 23 February 2015, paragraphs [0013]-[0043], fig. 1-8 (Family: none) | 1-3 |
| A | JP 2010-127305 A (JTEKT CORP.) 10 June 2010, entire text, all drawings (Family: none) | 1-3 |
| A | JP 2009-172663 A (SHODA SEISAKUSHO CO., LTD.) 06 August 2009, entire text, all drawings (Family: none) | 1-2 |

Form PCT/ISA/210 (continuation of second sheet) (January 2015)

## REFERENCES CITED IN THE DESCRIPTION

### Patent documents cited in the description

- JP 2013233842 A
- JP 2009172663 A